# EUROPÄISCHE PATENTSCHRIFT

(11) **EP 1 422 299 B1**
(45) Veröffentlichungstag und Bekanntmachung des Hinweises auf die Patenterteilung: **23.03.2005**
(21) Anmeldenummer: 02026157.4
(22) Anmeldetag: 25.11.2002
(51) Int. Cl.: C21B 3/08

(54) **Spritzkopf für eine Granulierungsanlage**
Spraying head for granulation device
Tête de pulvérisation pour appareil de granulation

(43) Veröffentlichungstag der Anmeldung: 26.05.2004
(73) Patentinhaber: PAUL WURTH S.A., 1122 Luxembourg (LU)
(72) Erfinder: Leyser, Patrick, 3919 Mondercange (LU); Cortina, Christian, 3937 Mondercange (LU); Kerschenmeyer, Guy, 8381 Kleinbettingen (LU)
(74) Vertreter: Schmitt, Armand

(56) Entgegenhaltungen:
- DE-C- 4 032 518
- US-A- 4 494 971

## Beschreibung

Die vorliegende Erfindung betrifft einen Spritzkopf für eine Granulierungsanlage.

### Stand der Technik

Bei der Granulierung von Hochofenschlacke wird Kühlwasser mittels eines Spritzkopfes auf einen Strom flüssiger Schlacke gespritzt, währenddessen dieser Schlackenstrom aus einer Schlackenrinne in ein Granulierungsbecken stürzt. Die flüssige Schlacke wird hierbei derart abgeschreckt, dass sie sich zu einem Granulat verfestigt.

Für die Granulierung einer Tonne Hochofenschlacke werden zwischen 4 und 12 m³ Granulierwasser benötigt. Der Granulierwasserdurchsatz in einem Spritzkopf beträgt bei großen Hochöfen folglich zwischen 1000 m³/h und 4000 m³/h. Ausschlaggebend für die Granulatqualität sind, neben der Granulierwassermenge, u.a. auch Impuls und Form der Wasserstrahlen, die auf den flüssigen Schlackenstrom auftreffen. Diese Parameter werden weitgehend durch den Spritzkopf bestimmt.

Der Schlackendurchsatz ist nicht gleichmäßig. Um eine wirtschaftliche Granulierung und eine gleichbleibende Granulatqualität zu gewährleisten, soll die Granulierwassermenge bei gleichbleibendem Druck an den Schlackendurchsatz angepasst werden.

Um dieses Ziel zu erreichen schlägt die DE 4032518 C1 einen Spritzkopf mit einem Lochdüsenfeld und einer regelbaren Schlitzdüse vor. Letztere umfasst zwei gegenläufig verschwenkbare Klappenflügel, die einen höhenverstellbaren Düsenschlitz ausbilden. Eine Längskante des Klappenflügels ist jeweils wellenförmig ausgebildet und drehbar in eine zylindrische Lagermulde eingepasst, welche sich in der Bodenfläche, bzw. der Deckenfläche, eines rechteckigen Düsenkanals quer zur Strömungsrichtung des Wassers erstreckt. Die andere Längskante des Klappenflügels bildet in diesem Düsenkanal jeweils die unter, bzw. obere Lippe des Düsenschlitzes aus. Durch gegenläufiges Verschwenken der beiden exzentrisch gelagerten Klappenflügel kann der Abstand der beiden Lippen verändert werden, d.h. die Höhe des Düsenschlitzes wird verkleinert oder vergrößert. Die beiden Klappenflügel sind außerhalb des Düsenkanals mit einem Gegenlaufgetriebe verbunden, das elektromotorisch angetrieben wird.

Der in der DE 4032518 C1 beschriebene Spritzkopf weist jedoch etliche Nachteile auf. So müssen z.B. das Gegenlaufgetriebe und der elektrische Antrieb relativ stark sein, weil der Wasserstrom auf die beiden Klappenflügel erhebliche Momente ausübt. Weiterhin lässt die Verschleißfestigkeit der vorgestellten Schlitzdüse zu wünschen übrig. In vielen Granulierungsanlagen führt das Granulierwasser in der Tat große Mengen Schlackensand mit sich, da es in einem geschlossenen Kreislauf geführt wird. Die Abrasionskraft eines solchen Wasser-Sand-Gemischs ist dem Fachmann wohl bekannt. In der Schlitzdüse aus der DE 4032518 C1 sind besonders die beiden Lippen des Düsenschlitzes einer verstärkten Abrasion ausgesetzt und verschleißen relativ schnell. Dieser Verschleiß führt zu einer relativ ungenauen Regelcharakteristik der Schlitzdüse. Zudem kann feiner Schlackensand in die Lagermulden der Klappenflügel eindringen, wodurch die Klappenflügel unter Umständen blockieren können.

### Aufgabe der Erfindung

Aufgabe der vorliegenden Erfindung ist es folglich, für eine Granulierungsanlage einen Spritzkopf mit einer regelbaren Schlitzdüse zu schaffen, die leicht zu betätigen ist, die wenig Wartung bedarf und die sich zudem durch ein stabile Regelcharakteristik auszeichnet. Diese Aufgabe wird erfindungsgemäß durch einen Spritzkopf nach Anspruch 1 gelöst.

### Kennzeichnung der Erfindung

Ein erfindungsgemäßer Spritzkopf umfasst zumindest eine regelbare Schlitzdüse, in welcher der Regelkörper ein zylindrischer Körper mit einem ovalen Querschnitt und einer Zentralachse ist. Dieser Regelkörper ist ungefähr mittig zwischen einer Boden- und Deckenfläche des Düsenkanals angeordnet und hier um seine Zentralachse derart verschwenkbar, dass sowohl unterhalb als auch oberhalb des Regelkörpers ein Düsenschlitz ausgebildet ist, dessen Höhe durch einfaches Verschwenken des Regelkörpers um seine Zentralachse einstellbar ist. Eine regelbare Schlitzdüse dieser Konstruktionsart erfordert selbst unter schwierigsten Bedingungen (wie z.B. abrasiver Sand im Granulierwasser) wenig Wartung und gewährleistet dennoch über einen sehr langen Zeitraum eine ausgezeichnete Regelcharakteristik. In diesem Zusammenhang ist besonders darauf hinzuweisen, dass der oval-zylindrische Regelkörper keine Schwachstellen aufweist, an denen der im Granulierwasser enthaltene Sand eine besonders schnelle Erosion hervorruft. Die Umströmung des oval-zylindrischen Regelkörpers ist zudem relativ wirbelfrei, so dass die Abrasionskraft des Schlackensandes nicht durch lokale Wirbel verstärkt wird. Der oval-zylindrische Regelkörper ist folglich auch bei starker Sandbelastung des Granulierwassers sehr lange einsetzbar, ohne dass sich die Regelcharakteristik der Schlitzdüse wesentlich verschlechtert. Bedingt durch die zentrale Anordnung des Regelkörpers im Düsenkanal kann sich zudem kein Feinsand in Nuten oder Spalten absetzen und die Funktionstüchtigkeit der Schlitzdüse beeinträchtigen. Man beachte weiterhin, dass der Wasserstrom auf den um seine Zentralachse verschwenkbaren Regelkörper nur einen geringen Moment ausübt. Für die Festlegung einer Winkelstellung des Regelkörpers sind folglich nur geringe Kraftmomente und somit schwache Antriebe erforderlich.

Um eine gute Regelcharakteristik und eine geringen Verschleiß zu gewährleisten, soll das Verhältnis der kleinen zur großen Achse des ovalen Querschnitts des Regelkörpers vorzugsweise zwischen 0,50 und 0,95 liegen.

Die Höhe des rechteckigen Querschnitts des Düsenkanals soll vorzugsweise um einige Millimeter größer als die große Achse des ovalen Querschnitts sein. Hierdurch ist z.B. gewährleistet, dass bei Verformungen des Düsenkanals und/oder Regelkörpers, der Regelkörper nicht in geschlossener Stellung blockiert.

An jedem seiner beiden Enden weist der Regelkörper vorzugsweise jeweils einen Lagerzapfen auf, der seitlich aus dem Düsenkanal herausgeführt und außerhalb des Düsenkanals drehbar gelagert ist. Ein einfaches Kurbelgetriebe ermöglicht es, hierbei den Hub eines Hubantriebs in eine Schwenkbewegung des Regelkörpers um seine Zentralachse umzuwandeln. Da nur sehr kleine Stellmomente erforderlich sind, kann der Hubantrieb vorteilhaft ein relativ schwacher elektrischer Linearantrieb sein, mit dem sich die Winkelstellung des Regelkörpers besonders einfach festlegen lässt.

In einer vorteilhaften Ausgestaltung weist der Regelkörper mindestens an einem Ende einen kreiszylindrischen Abdichtflansch auf, der in eine kreisrunde Bohrung in einer Seitenwand der Schlitzdüse eingesetzt ist und hierin mittels eines O-Rings abgedichtet ist. Diese kreisrunde Bohrung soll dabei groß genug sein, um den Regelkörper axial durch diese Bohrung in den Düsenkanal einund auszuführen, so dass sich der Regelkörper relativ einfach auswechseln lässt.

Die Oberfläche des Regelkörpers, sowie die Bodenfläche und Deckenfläche des Düsenkanals sind vorzugsweise plasmabeschichtet, wodurch ihre Verschleißfestigkeit noch weiter verbessert wird. Durch die einfache, konvexe Oberfläche des Regelköpers, ist eine solche Oberflächenbeschichtung des Regelkörpers besonders dauerhaft.

Ein erfindungsgemäßer Spritzkopf kann weiterhin einen Wasseranschlusskasten umfassen, in dessen Vorderseite die Schlitzdüse angeordnet ist, wobei zusätzlich ein Lochdüsenfeld in der Vorderseite oberhalb und/oder unterhalb der Schlitzdüse angeordnet sein kann.

Wird der Spritzkopf von einer Pumpenanlage mit Granulierwasser versorgt, so umfasst er vorteilhaft eine Regelvorrichtung des Granulierwasserdruckes, in welche die Schlitzdüse als Stellglied eingebunden ist. Wird der Spritzkopf jedoch von einem Hochspeicher mit Granulierwasser versorgt, so umfasst er vorteilhaft eine Regelvorrichtung des Granulierwasserdurchsatzes, in welche die Schlitzdüse als Stellglied eingebunden ist.

Es bleibt anzumerken, dass ein erfindungsgemäßer Spritzkopf besonders vorteilhaft in Granulierungsanlagen mit großen Wasserdurchsätzen, wie z.B. Granulierungsanlagen für Hochofenschlacke einsetzbar ist.

### Figurenaufstellung

Im folgenden wird nun eine bevorzugte Ausgestaltung der Erfindung als Ausführungsbeispiel der Erfindung anhand der beiliegenden Figuren näher beschrieben. Es zeigen:
- Fig. 1:: eine dreidimensionale Ansicht eines erfindungsgemäßen Spritzkopfes;
- Fig. 2:: einen Querschnitt durch den Spritzkopf der Fig. 1, wobei die Lage der Schnitteben in Fig. 3 mit der Linie 2-2 angedeutet ist;
- Fig. 3:: einen Schnitt durch den Spritzkopf der Fig. 1, wobei die Lage der Schnitteben in Fig. 2 mit der Linie 3-3 angedeutet ist; und
- Fig. 4:: ein Diagramm welches das Regelverhalten einer Schlitzdüse in einem erfindungsgemäßen Spritzkopf illustriert.

### Beschreibung einer bevorzugten Ausgestaltung der Erfindung anhand der Figuren

Der in den Figuren dargestellte Spritzkopf 10 ist für eine Granulierungsanlage von Hochofenschlacke bestimmt. Seine Aufgabe ist es, Kühlwasser auf einen Strom flüssiger Schlacke zu spritzen, währendessen dieser Strom z.B. von einer Schlackenrinne in ein Granulierungsbecken stürzt.

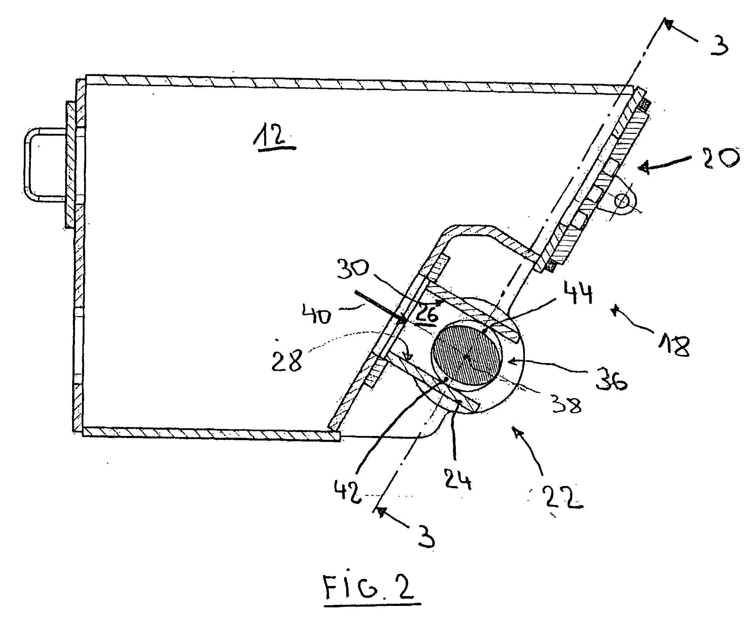

Der gezeigte Spritzkopf 10 umfasst einen Wasseranschlusskasten 12 mit einem seitlichen Granulierwasseranschluss 14 und einem seitlichen Tragstutzen 16. In Fig. 2 zeigt der Pfeil 18 auf die Vorderseite des Wasseranschlusskastens 12, aus der das Granulierwasser austritt. Dies geschieht einerseits über ein Lochdüsenfeld 20 in der oberen Hälfte der Vorderseite 18 und andererseits über eine Schlitzdüse 22 in der unteren Hälfte der Vorderseite.

Die Schlitzdüse 22 umfasst einen Rohrstutzen 24, in dem ein Düsenkanal 26 mit einem rechteckigen Durchflussquerschnitt nach unten durch eine Bodenfläche 28, nach oben durch eine Deckenfläche 30 und seitlich durch zwei Seitenflächen 32, 34 begrenzt wird. Alle diese Flächen 28, 30, 32, 34 sind plasmabeschichtet um besser gegen die scheuernde Wirkung von Schlackensand geschützt zu sein. Man beachte in diesem Zusammenhang ebenfalls, dass der Rohrstutzen 24 als auswechselbares Teil ausgebildet ist und auf den Wasseranschlusskastens 12 aufgeflanscht ist.

Die Schlitzdüse 22 umfasst weiterhin einen zylindrischen Durchflussregelkörper 36, der sich im Düsenkanal 26 mittig zwischen der Bodenfläche 28 und der Deckenfläche 30 über die ganze Breite des Düsenkanals 26 erstreckt. In Fig. 2 sieht man, dass der Regelkörper 36 einen elliptischen Querschnitt aufweist. Der elliptisch-zylindrische Regelkörper 36 ist um seine Zentralachse 38 drehbar.

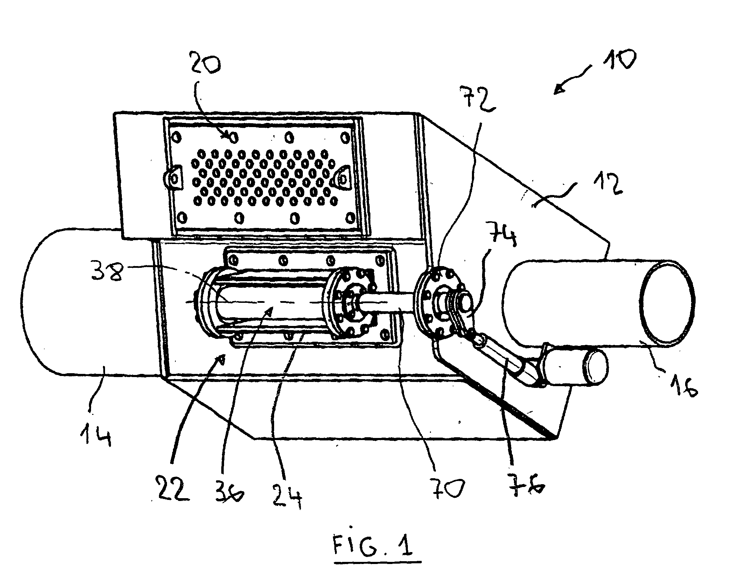

In Fig 1 ist die Ebene welche die Zentralachse 38 und die kleine Ellipsenachse enthält, senkrecht zur Anströmrichtung 40 des Wassers. In dieser Stellung des Regelkörpers 36 ist der Durchflussquerschnitt des Düsenkanals 26 am wenigsten durch den Regelkörper 36 eingeengt. Ein unterer Düsenschlitz 42 ist zwischen dem Regelkörper 36 und der Bodenfläche 28 und ein oberer Düsenschlitz 44 zwischen dem Regelkörper 36 und der Deckenfläche 30 ausgebildet. Durch diese beiden Düsenschlitze 42, 44 strömt das Wasser in zwei flachen Strahlen aus dem Rohrstutzen 24.

Wird der Regelkörper 36 aus der in Fig. 1 gezeigten Position um seine Zentralachse 38 verschwenkt, so nimmt sowohl die Höhe des unteren, als auch des oberen Düsenschlitzes 42, 44 ab (siehe Fig. 2). In anderen Worten, der Durchflussquerschnitt des Düsenkanals 26 wird im Bereich des Regelkörpers 36 reduziert. Der Durchflussquerschnitt ist minimal, wenn die Ebene welche die Zentralachse 38 und die große Ellipsenachse enthält, senkrecht zur Anströmrichtung 40 des Wassers ist, d.h. wenn der Regelkörper 36 um 90° aus der in Fig. 1 gezeigten Position um seine Zentralachse 38 verschwenkt wird. Da die große Ellipsenachse um einige Millimeter kleiner als die Höhe H des Düsenkanals 26 ist, sind auch in dieser Stellung des Regelkörpers 36 die beiden Düsenschlitze 42, 44 noch leicht offen. Hierdurch wird die Spritzdüse 22 relativ unempfindlich gegenüber Verformungen des Rohrstutzens 24, die z.B. durch Temperatureinflüsse und/oder mechanische Einwirkungen verursacht werden können. Es bleibt festzustellen, dass auch die Oberfläche des Regelkörpers 36 plasmabeschichtet ist.

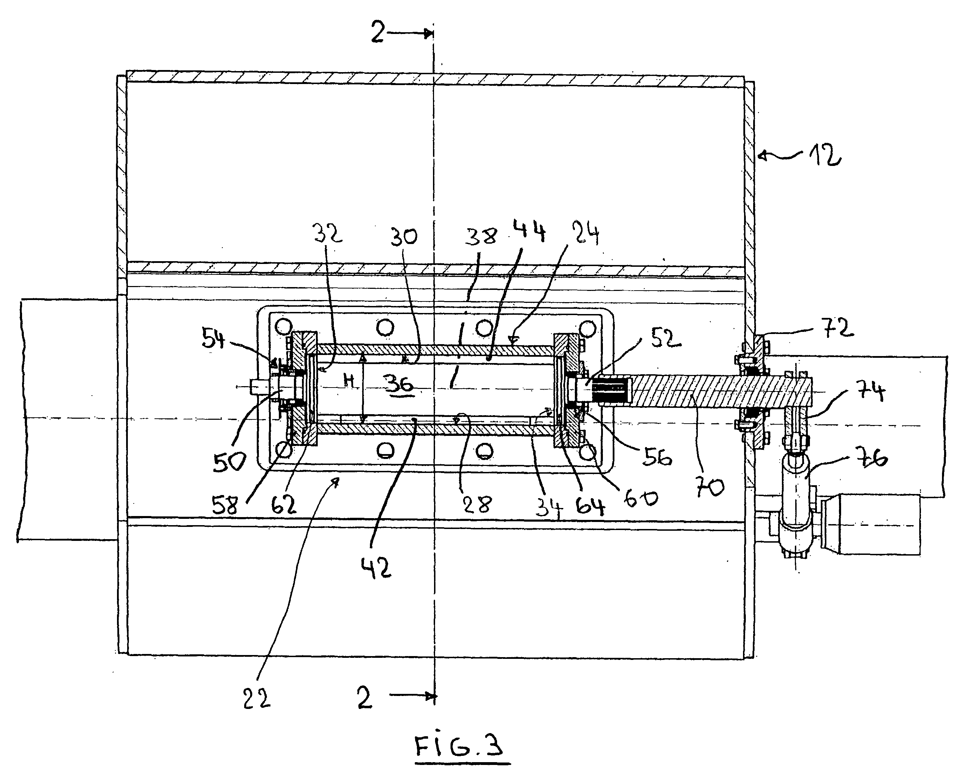

In Fig. 3 sieht man, dass der Regelkörper 36 an jedem seiner beiden Enden einen Lagerzapfen 50, bzw. 52 aufweist, der seitlich aus dem Düsenkanal 26 herausgeführt ist und hier drehbar in einem Lager 54, bzw. 56 gelagert ist. Die beiden Lager 54, 56 sind vorteilhaft in Befestigungsflanschen 58, 60 angeordnet, die von außen auf die Seitenwände des Rohrstutzens 24 aufgeschraubt sind.

An jedem seiner beiden Enden weist der Regelkörper 36 zusätzlich einen kreiszylindrischen Abdichtflansch 62, 64 auf, der in eine kreisrunde Bohrung in einer Seitenwand des Rohrstutzens 26 eingesetzt ist und hierin mittels eines O-Rings abgedichtet ist. Man beachte, dass der Durchmesser dieser beiden kreisrunden Bohrungen in der Seitenwand des Rohrstutzens 24 größer als die große Ellipsenachse des Regelkörpers 36 ist, so dass man, nach Lösen der beiden Befestigungsflansche 58, 60, den Regelkörper 36 durch diese Bohrungen aus dem Düsenkanal 26 herausnehmen und auch wiederum einbauen kann.

Das Bezugszeichen 70 in Fig. 3 zeigt eine Verlängerungswelle, die auf den Lagerzapfen 52 aufgesteckt ist und mit diesem drehfest verbunden ist. Diese Verlängerungswelle 70 ist in einem Flansch 72 an der Außenseite des Wasseranschlusskastens 12 drehbar gelagert und weist auf der anderen Seite dieses Flansches eine Kurbel 74 auf. Letztere ist mit einem elektrischen Linearantrieb 76 derart verbunden, dass ein Hub dieses Hubantriebs über die Kurbel 74 in eine Schwenkbewegung des Regelkörpers um seine Drehachse umgewandelt wird. Die Winkelamplitude soll hierbei mindestens 90° betragen, damit das Regelpotential des Regelkörpers 36 voll ausgenutzt werden kann. Es ist zu beachten, dass der Antrieb 76 relativ schwach sein kann, da durch die Form und Lagerung des Regelkörpers 36 nur kleine Stellmomente für die Überwindung der Wasserkraft erforderlich sind. Anstelle eines elektrischen Linearantriebs 76 könnte man selbstverständlich auch einen Pneumatikzylinder einsetzen. Es ist zudem ebenfalls möglich den Regelkörper 36 mittels eines Drehantriebs zu verschwenken. Als Drehantrieb kommt z.B. auch ein elektrischer Schrittmotor in Frage, mit dem sich, wie beim Linearantrieb 76, eine bestimmte Winkelstellung des Regelkörpers genau einstellen lässt.

Es ist weiterhin hervorzuheben, dass der Regelkörper 36 mit dem elliptischen Querschnitt nur wenig Turbulenzen im Wasser erzeugt. Dies wirkt sich nicht nur positiv auf den Gesamtdruckverlust des Granulierwassers im Spritzkopf auf, sondern die scheuernde Wirkung des Schlackensands auf den vom Wasser umströmten Flächen wird ebenfalls wesentlich reduziert.

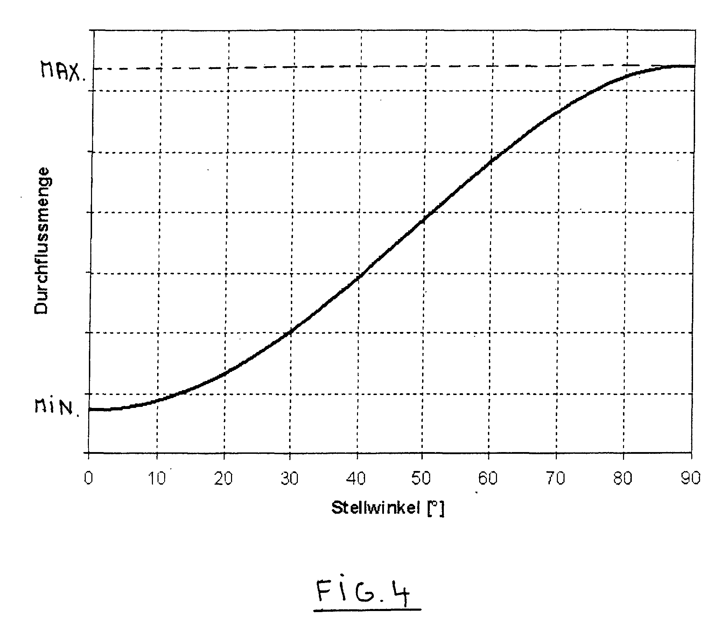

Das Diagramm der Fig. 4 zeigt die Durchflussmenge der Schlitzdüse 22 in Funktion des Stellwinkels des Regelkörpers 36. Ein Stellwinkel von 0° bedeutet, dass die Ebene welche die Zentralachse 38 und die große Ellipsenachse enthält senkrecht zur Anströmrichtung 40 des Wassers ist. Ein Stellwinkel von 90° bedeutet, dass die Ebene welche die Zentralachse 38 und die kleine Ellipsenachse enthält senkrecht zur Anströmrichtung 40 des Wassers ist. Der Regelkörper 36 für den das Diagramm erstellt wurde, weist einen elliptischen Querschnitt auf, für den das Verhältnis der kleinen zur großen Achse ungefähr 0.76 ist. Dieses Achsenverhältnis bestimmt die Regelcharakteristik der Schlitzdüse 22. Es sollte vorzugsweise zwischen 0,50 und 0,95 liegen. Aus dem Diagramm der Fig. 4 geht weiterhin hervor, dass zwischen 20° und 70° die Durchflussmenge ungefähr proportional zum Stellwinkel zunimmt.

Wird der Spritzkopf 10 unmittelbar von einer Pumpenanlage mit Granulierwasser versorgt, umfasst er vorzugsweise eine Regelvorrichtung welche die Winkelstellung des Regelkörpers 36 in Funktion einer Druckmessung im Wasseranschlusskasten 12 regelt. Mit einer solchen Regelung lässt sich der Druck in dem Wasseranschlusskasten 12 z.B. konstant halten. Der Wasserdurchsatz im Spritzkopf 10 wird dann durch eine trägere Durchsatzregelung der Pumpenanlage festlegt.

Wird der Spritzkopf 10 mit konstantem Wasserdruck versorgt, z.B. aus einem Hochspeicher, umfasst er vorteilhaft eine Regelvorrichtung des Granulierwasserdurchsatzes in welche die Schlitzdüse dann als Stellglied eingebunden ist.

## Patentansprüche

1. Spritzkopf für eine Granulierungsanlage umfassend:
eine Schlitzdüse (22), in der ein Düsenkanal (26) mit länglichem Durchflussquerschnitt nach unten durch eine Bodenfläche (28), nach oben durch eine Deckenfläche (30) und seitlich jeweils durch eine Seitenfläche (32, 34) begrenzt wird, wobei sich ein länglicher Durchflussregelkörper (36) im Düsenkanal (26) axial zwischen den beiden Seitenflächen (32, 34) erstreckt um höhenmäßig einen Düsenschlitz abzugrenzen, und der Regelkörper (36) um eine Längsachse verschwenkbar ist um die Höhe dieses Düsenschlitzes einzustellen;
**dadurch gekennzeichnet, dass**
der Regelkörper (36) ein zylindrischer Körper mit einem ovalen Querschnitt und einer Zentralachse ist, der ungefähr mittig zwischen der Bodenfläche (28) und der Deckenfläche (30) angeordnet ist und um seine Zentralachse (38) verschwenkbar ist, derart dass sowohl unterhalb als auch oberhalb des Regelkörpers (36) ein Düsenschlitz (42, 44) ausgebildet ist, dessen Höhe durch Verschwenken des Regelkörpers (36) um seine Zentralachse (38) einstellbar ist.

2. Spritzkopf nach Anspruch 1, wobei:
der ovale Querschnitt eine kleine und eine große Achse aufweist und das Verhältnis der kleinen zur großen Achse zwischen 0,50 und 0,95 liegt.

3. Spritzkopf nach Anspruch 2, wobei:
der Düsenkanal (26) einen rechteckigen Querschnitt mit einer Höhe (H) aufweist, die um einige Millimeter größer als die große Achse des ovalen Querschnitts ist, so dass die beiden Düsenschlitze (42, 44) stets offen bleiben.

4. Spritzkopf nach einem der Ansprüche 1 bis 3, wobei:
der Regelkörper (36) an jedem seiner beiden Enden jeweils einen Lagerzapfen (50, 52) umfasst der seitlich aus dem Düsenkanal (26)
herausgeführt und außerhalb des Düsenkanals (26) drehbar gelagert ist.

5. Spritzkopf nach Anspruch 4, umfassend:
eine Kurbel (74), die mit einem der beiden Lagerzapfen (52) drehfest verbunden ist; und
einen Hubantrieb (76) der mit der Kurbel (74) derart verbunden ist, dass ein Hub des Hubantriebs in eine Schwenkbewegung des Regelkörpers (36) um seine Zentralachse (38) umgewandelt wird.

6. Spritzkopf nach Anspruch 4 oder 5, wobei:
der Regelkörper (36) mindestens an einem Ende einen kreiszylindrischen Abdichtflansch (62, 64) aufweist, der in eine kreisrunde Bohrung in einer Seitenwand der Schlitzdüse (22) eingesetzt und hierin mittels eines O-Rings abgedichtet ist, und
die kreisrunde Bohrung groß genug ist um den Regelkörper (36) axial durch diese Bohrung in den Düsenkanal (26) ein- und auszuführen.

7. Spritzkopf nach einem der Ansprüche 1 bis 6, wobei:
die Oberfläche des Regelkörpers (36), sowie die Bodenfläche (28) und Deckenfläche (30) des Düsenkanals (26) plasmabeschichtet sind.

8. Spritzkopf nach einem der Ansprüche 1 bis 7, umfassend:
einen Wasseranschlusskasten mit einer Vorderseite in welcher die Schlitzdüse (22) angeordnet ist; und
ein Lochdüsenfeld, das in der Vorderseite oberhalb und/oder unterhalb der Schlitzdüse (22) angeordnet ist.

9. Spritzkopf nach einem der Ansprüche 1 bis 8, umfassend:
eine Regelvorrichtung des Granulierwasserdruckes im Spritzkopf in welche die Schlitzdüse (22) als Stellglied eingebunden ist.

10. Spritzkopf nach einem der Ansprüche 1 bis 8, umfassend:
eine Regelvorrichtung des Granulierwasserdurchsatzes im Spritzkopf in welche die Schlitzdüse (22) als Stellglied eingebunden ist.

## Claims

1. Spray head for a granulation plant, comprising:
a slit nozzle (22) in which a jet channel (26) of elongated cross-section is delimited below by a bottom surface (28), above by a top surface (30) and at each side by lateral surfaces (32, 34), wherein an elongated flow regulating element (36) in the jet channel (26) extends axially between the two lateral surfaces (32, 34) in order to limit a jet slit in height, the flow regulating element (36) being able to be tilted about a longitudinal axis in order to adjust the height of this slit nozzle;
**characterized in that**
the flow regulating element (36) is a cylindrical body of oval cross-section with a central axis positioned approximately midway between the bottom surface (28) and the top surface (30) and able to be tilted about its central axis (38) so as to form both above and below the flow regulating element (36) a jet nozzle (42, 44) whose height can be adjusted by the tilting of the flow regulating element (36) about its central axis (38).

2. Spray head according to Claim 1, wherein:
the oval cross-section comprises a short axis and a long axis, the ratio of the short to the long axis lying between 0.50 and 0.95.

3. Spray head according to Claim 2, wherein:
the jet channel (26) comprises a rectangular cross-section of height (H) a few millimetres greater than the long axis of the oval cross-section, so that the two jet nozzles (42, 44) remain permanently open.

4. Spray head according to one of Claims 1 to 3, wherein:
the flow regulating element (36) comprises at each of its ends a bearing journal (50, 52) that protrudes laterally outside the jet channel (26) and is mounted free to rotate in bearings outside the jet channel (26).

5. Spray head according to Claim 4, comprising:
a crank (74) fixed to and unable to rotate relative to one of the two bearing journals (52); and
a lift drive (76) connected to the crank (74) so that a lift of the lift drive is converted into a tilting movement of the flow regulating element (36) about its central axis (38).

6. Spray head according to Claim 4 or 5, wherein:
the flow regulating element (36) comprises a circular cylindrical joint flange (62, 64) at least at one end seated in a circular hole bored in the side wall of the slit nozzle (22) and sealed in with an O-ring joint, and
the circular hole is sufficiently large to enable the flow regulating element (36) to be axially put in and taken out through this hole in the jet channel (26).

7. Spray head according to one of Claims 1 to 6, wherein:
the surface of the flow regulating element (36), as well as the bottom surface (28) and the top surface (30) of the jet channel (26) are plasma coated.

8. Spray head according to one of Claims 1 to 7, comprising:
a water supply box with a front surface in which the slit nozzle (22) is positioned; and
an array of hole jets, positioned in the front surface above and/or below the slit nozzle (22).

9. Spray head according to one of Claims 1 to 8, comprising:
a regulation device for the granulating water pressure in the spray head in which the slit nozzle (22) is included as a regulating element.

10. Spray head according to one of Claims 1 to 8, comprising:
a regulation device for the granulating water flow rate in the spray head in which the slit nozzle (22) is included as a regulating element.

## Revendications

1. Tête de pulvérisation pour une installation de granulation, comprenant:
un ajutage à fentes (22) dans lequel un canal d'ajutage (26) dont la section transversale de passage est allongée est délimité vers le bas par une surface de fond (28), vers le haut par une surface de plafond (30) et des deux côtés à chaque fois par une surface latérale (32, 34), un corps allongé (36) de réglage du débit s'étendant axialement dans le canal d'ajutage (26) entre les deux surfaces latérales (32, 34) pour délimiter la hauteur d'une fente d'ajutage, le corps de réglage (36) pouvant pivoter autour d'un axe longitudinal pour définir la hauteur de cette fente d'ajutage,
**caractérisé en ce que**
le corps de réglage (36) est un corps cylindrique de section transversale ovale qui présente un axe central disposé sensiblement au milieu entre la surface de fond (28) et la surface de plafond (30) et qui peut pivoter autour de son axe central (38) de manière à former tant en dessous qu'au-dessus du corps de réglage (36) une fente d'ajutage (42, 44) dont la hauteur peut être réglée en faisant pivoter le corps de réglage (36) autour de son axe central (38).

2. Tête de pulvérisation selon la revendication 1, dans laquelle
la section transversale ovale présente un petit axe et un grand axe, le rapport entre le petit axe et le grand axe étant copris entre 0,50 et 0,95.

3. Tête de pulvérisation selon la revendication 2, dans laquelle
le canal d'ajutage (26) présente une section transversale rectangulaire d'une hauteur (H) qui est de quelques millimètres plus grande que le grand axe de la section transversale ovale, de telle sorte que les deux fentes de d'ajutage(42, 44) restent toujours ouvertes.

4. Tête de pulvérisation selon l'une des revendications 1 à 3, dans laquelle
le corps de réglage (36) comprend à chacune de ses deux extrémités un tourillon de montage (50, 52) qui sort latéralement du canal d'ajutage (26) et qui est monté à rotation à l'extérieur du canal d'ajutage (26).

5. Tête de pulvérisation selon la revendication 4, comprenant
une manivelle (74) qui est reliée à rotation solidaire à l'un des deux tourillons de montage (52) et un entraînement de levage (76) qui est relié à la manivelle (74) de manière à convertir un levage de l'entraînement de levage en un déplacement de pivotement du corps de réglage (36) autour de son axe central (38).

6. Tête de pulvérisation selon la revendication 4 ou 5, dans laquelle
le corps de réglage (36) présente au moins à une extrémité une bride cylindrique circulaire d'étanchéité (62, 64) qui est insérée dans un alésage circulaire ménagé dans une paroi latérale de l'ajutage à fentes (22) et y est rendu étanche au moyen d'un joint torique, l'alésage circulaire étant suffisamment grand pour permettre d'insérer et d'extraire le corps de réglage (36) axialement dans le canal d'ajutage (26) par cet alésage.

7. Tête de pulvérisation selon l'une des revendications 1 à 6, dans laquelle
la surface du corps de réglage (36) ainsi que la surface de fond (28) et la surface de plafond (30) du canal d'ajutage (26) sont revêtues par plasma.

8. Tête de pulvérisation selon l'une des revendications 1 à 7, comprenant
un caisson de raccordement d'eau doté d'un côté avant dans lequel l'ajutage à fentes (22) est disposé et un ensemble de perforations d'ajutage qui est disposé dans le côté avant au-dessus et/ou en dessous de l'ajutage à fentes (22).

9. Tête de pulvérisation selon l'une des revendications 1 à 8, comprenant
un dispositif de réglage de la pression d'eau de granulation dans la tête de pulvérisation, dans lequel l'ajutage à fentes (22) est incorporé à titre d'organe de réglage.

10. Tête de pulvérisation selon l'une des revendications 1 à 8, comprenant
un dispositif de réglage du débit d'eau de granulation dans la tête de pulvérisation, dans lequel l'ajutage à fentes (22) est incorporé à titre d'organe de réglage.
